# EUROPÄISCHE PATENTSCHRIFT

(11) **EP 0 749 378 B1**
(45) Veröffentlichungstag und Bekanntmachung des Hinweises auf die Patenterteilung: **20.10.1999**
(21) Anmeldenummer: 95940167.0
(22) Anmeldetag: 12.12.1995
(51) Int. Cl.: B60S 1/38, F16B 21/12, F16C 11/02

(54) **WISCHBLATT**
WIPER BLADE
RACLETTE D'ESSUIE-GLACE

(30) Priorität: 17.01.1995 DE 29500632 U
(43) Veröffentlichungstag der Anmeldung: 27.12.1996
(73) Patentinhaber: ROBERT BOSCH GMBH, 70442 Stuttgart (DE)
(72) Erfinder: MERKEL, Wilfried, D-77876 Kappelrodeck (DE); MAYER, Jürgen, D-76571 Gaggenau (DE); POLLARIS, Eric, B-3500 Hasselt (BE)
(86) Internationale Anmeldenummer: DE9501775
(87) Internationale Veröffentlichungsnummer: WO9622205

(56) Entgegenhaltungen:
- DE-A- 3 830 513
- DE-A- 4 411 085
- DE-A- 4 438 830
- FR-A- 2 281 515
- US-A- 4 795 288

## Beschreibung

### Stand der Technik

Die Erfindung geht aus von einem bekannten Wischblatt (US-Patentschrift 4 795 288), bei dem der Gelenkbolzen in seinem Mittelabschnitt eine elastisch eindrückbare, spindelförmige Verdickung hat, welche ein Einstecken des Gelenkbolzens in seine Lagerposition ermöglicht. Die beiden Auslaufenden der Verdickung sind so angeordnet und ausgebildet, daß sich diese in den Durchbrechungen des Unterbügels verklemmen und ein Festsitzen zwischen Bolzen und Unterbügel bewirken. Bei ungünstiger Lage der zulässigen, unvermeidbaren Toleranzen der Durchbrechungen kann nicht ausgeschlossen werden, daß die Verdickungsenden noch durch den Unterbügel hindurchgreifen und auch den Oberbügel festhalten, so daß die Beweglichkeit im Tragbügelgelenk zumindest beeinträchtigt wird.

Bei dem erfindungsgemäßen Wischblatt dagegen enden die Sicherungsmittel an eindeutig definierten Anschlagschultern, die sich zwischen den einander zugewandten Seiten der U-Schenkel des Unterbügels befinden. Dadurch ist es ausgeschlossen, daß die Sicherungsmittel auch auf den Oberbügel einwirken können. Die erforderliche Relativbewegung zwischen Ober- und Unterbügel ist somit sichergestellt.

Eine besonders vorteilhafte Ausgestaltung der Sicherungsmittel ergibt sich, wenn diese durch zumindest einen lappenartigen, die Anschlagschultern aufweisenden Flügel gebildet sind, der mit seiner einen Längsseite mit dem Gelenkbolzen innerhalb dessen Mantelfläche verbunden ist und sich im wesentlichen tangential zum Gelenkbolzen über dessen Mantelfläche hinaus erstreckt, wenn weiter der Flügel eine Länge hat, die auf den Abstand zwischen den einander zugewandten Flächen der U-Schenkel des Unterbügels abgestimmt ist und wenn darüber hinaus dem Flügel eine sich über die Flügellänge hinaus erstreckende Ausnehmung in dem Gelenkbolzen zugeordnet ist, in welche das freie Ende des Flügels vollständig einbringbar ist.

Eine besonders sichere Gelenkverbindung zwischen Ober- und Unterbügel wird erreicht, wenn an dem Gelenkbolzen, bezogen auf dessen Längsachse, zwei lappenartige Flügel angeordnet sind, wobei jedem Flügel eine Ausnehmung in dem Gelenkbolzen zugeordnet ist.

Zweckmäßig sind die beiden lappenartigen Flügel in mit Abstand voneinander liegenden, zueinander parallelen Ebenen angeordnet.

Vorteile bei der Fertigung des Gelenkbolzens ergeben sich, wenn die Flügel von ihrer Entstehungsstelle am Gelenkbolzen aus, sich nach derselben Seite erstrecken.

Weitere, vorteilhafte Ausgestaltungen und Verbesserungen der Erfindung sind in den Unteransprüchen aufgeführt.

### Zeichnung

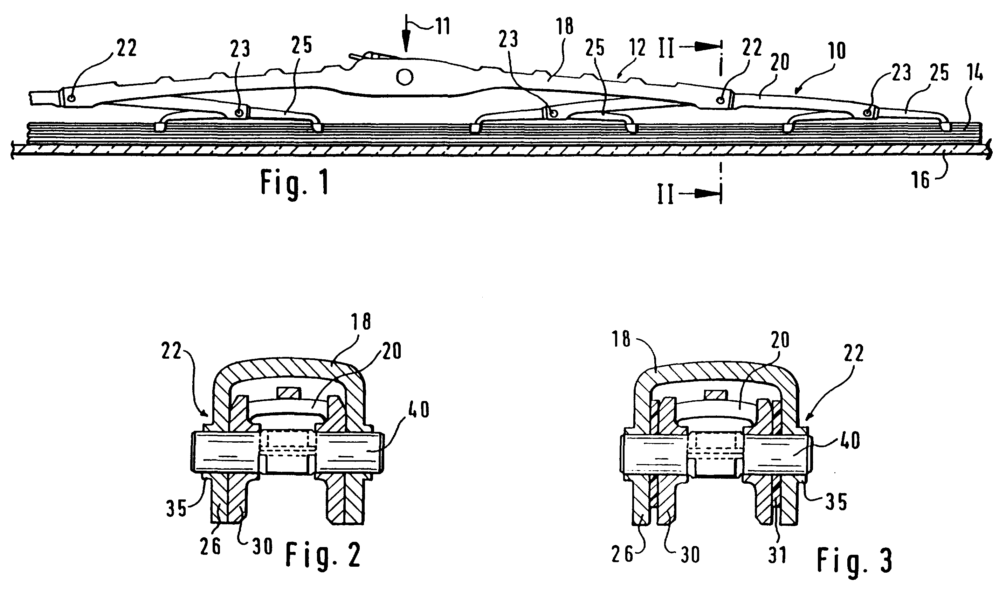

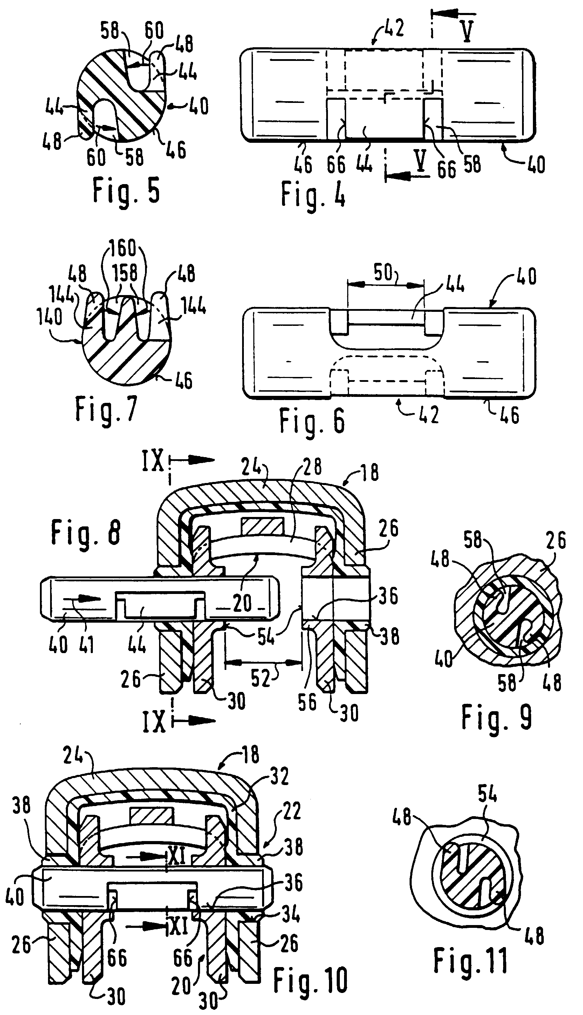

Ausführungsbeispiele der Erfindung sind in der Zeichnung dargestellt und in der nachfolgenden Beschreibung näher erläutert. Es zeigen Figur 1 eine Teil-Seitenansicht eines an einer Windschutzscheibe eines Kraftfahrzeuges angelegten Wischblatts, Figur 2 einen Schnitt durch eine Gelenkverbindung zwischen zwei zu einem Tragbügelsystem des Wischblatts gehörenden Tragbügeln, wobei das Gelenk gemäß einer ersten Ausführungsform ausgebildet ist, Figur 3 einen Schnitt gemäß Figur 2 durch eine anders ausgebildete Gelenkverbindung, Figur 4 eine Ansicht des zur Gelenkverbindung gehörenden Gelenkbolzens in vergrößerter Darstellung, Figur 5 einen Schnitt durch den Gelenkbolzen gemäß Figur 4, entlang der Linie V-V, Figur 6 eine Draufsicht auf den Gelenkbolzen gemäß Figur 4, Figur 7 einen Schnitt gemäß Figur 5 durch einen anders ausgebildeten Gelenkbolzen, Figur 8 eine vergrößerte Darstellung eines Schnitts entlang der Linie II-II in Figur 1, durch eine weitere Ausführungsform des Gelenks, wobei sich der Gelenkbolzen gemäß Figur 4 in einer Zwischenmontagestellung befindet, Figur 9 einen Teilschnitt durch die Anordnung gemäß Figur 8 entlang der Linie IX-IX, Figur 10 das Gelenk gemäß Figur 8 mit fertig montiertem Gelenkbolzen und Figur 11 einen Teilschnitt durch die Anordnung gemäß Figur 10, entlang der Linie XI-XI in Figur 10.

### Beschreibung der Ausführungsbeispiele

In Figur 1 ist ein Wischblatt 10 teilweise dargestellt, zu dem ein mehrgliedriges, langgestrecktes Tragbügelsystem 12 gehört. Das Tragbügelgestell dient zum Halten einer nachgiebigen wischleiste 14, die an der äußeren Oberfläche einer zu einem nicht näher dargestellten Kraftfahrzeug gehörenden Scheibe 16 angelegt ist. Das Tragbügelsystem 12 weist mehrere, waagebalkenartig miteinander gelenkig verbundene Tragbügel auf, von denen hier insbesondere ein Hauptbügel 18 und ein Zwischenbügel 20 näher betrachtet werden sollen. Insbesondere befassen sich die weiteren Ausführungen mit der Gelenkverbindung 22 zwischen den beiden Bügeln 18 und 20. Die Gelenkverbindung 22 kann natürlich auch bei sämtlichen weiteren Gelenkverbindungen 23 zwischen den anderen Tragbügeln des Tragbügelsystems realisiert sein. Wie Figur 1 weiter zeigt, liegt der Hauptbügel 18 über den Zwischenbügel 20, so daß im folgenden der Hauptbügel 18 als Oberbügel und der Zwischenbügel 20 als Unterbügel bezeichnet wird. Es ist weiter ersichtlich, daß der Zwischenbügel 20 gegenüber den an diesem angelenkten Krallenbügeln 25 als Oberbügel im Sinne der Erfindung anzusehen ist, wobei die mit diesem über die Gelenkverbindungen 23 verbundenen Krallenbügel Unterbügel im Sinne der Erfindung bilden. Die Krallenbügel 25 selbst dienen zum Halten der Wischleiste 14 und zum Verteilen einer durch einen Pfeil 11 angedeuteten Kraft zum Anlegen des Wischblatts 10 an der Scheibe 16.

Die besondere Ausgestaltung der Gelenkverbindungen 22 bzw. 23 soll anhand der Figuren 4 bis 10 näher erläutert werden. Die in den Figuren 2, 3 und 10 dargestellten Schnitte zeigen, daß der Oberbügel 18 im Bereich der Gelenkverbindung 22 U-förmig ausgebildet ist. Dies gilt ebenfalls für den Unterbügel 20. Somit hat der Oberbügel 18 eine U-Basis 24 von der aus sich die beiden U-Schenkel 26 erstrecken. Auch der Unterbügel 20 weist eine U-Basis 28 auf, an welche sich die beiden U-Schenkel 30 anschließen. Es ist weiter ersichtlich, daß der Oberbügel 18 den Unterbügel 20 so übergreift, daß die U-Schenkel 26 bzw. 30 der beiden Tragbügel 18 bzw. 20 im wesentlichen parallel zueinander liegen. Da die beiden Tragbügel 18 und 20 aus Metall hergestellt sind, ist zur Verhinderung einer metallischen Berührung zwischen den beiden Tragbügeln 18 und 20 ein Kunststoffutter 32 angeordnet, das eine Berührung der beiden Tragbügel 18 und 20 verhindert. In den Schenkeln 26 des Oberbügels 18 sind Durchbrechungen 34 vorgesehen, die koaxial zu Durchbrechungen 36 in den U-Schenkeln 30 des Unterbügels 20 angeordnet sind (Figur 10). Die Durchbrechungen 34 in den Schenkeln 26 des Oberbügels 18 weisen einen etwas größeren Durchmesser auf als dies bei den Durchbrechungen 36 in den Schenkeln 30 des Unterbügels 20 der Fall ist. In die Durchbrechungen 34 ragende Lageraugen 38 des Kunststoffutters 32 reduzieren den Durchmesser der Durchbrechungen 34 auf den Durchmesser der Durchbrechungen 36. Ein die Lageraugen 38 und damit die Durchbrechungen 34 im Oberbügel 18 sowie die Durchbrechungen 36 im Unterbügel 20 durchdringender Gelenkbolzen 40 sorgt für eine gelenkige Verbindung zwischen dem Oberbügel 18 und dem Unterbügel 20.

Zur Vergrößerung der Lagerfläche des Gelenkbolzens 40 in den Durchbrechungen 34 des übergeordneten Tragbügels 18 ist in den Ausführungsbeispielen nach Figur 2 und 3 an den Durchbrüchen 34 jeweils ein nach außen gerichteter Durchzug 35 angebracht.

Eine erste Ausführungsform des Gelenkbolzens 40 ist in den Figuren 4 bis 6 dargestellt. Sein Durchmesser ist auf den Durchmesser der Durchbrechung 36 im Unterbügel 20 und auf den Bohrungsdurchmesser der Lageraugen 38 so abgestimmt, daß er in diesen frei drehbar ist. Er weist in seinem Mittelbereich 42 zwei lappenartige Flügel 44 auf, die eine im wesentlichen rechteckige Gestalt haben. Die Flügel 44 sind mit ihrer einen Längsseite mit dem Gelenkbolzen 40 verbunden. Die Verbindungsstelle zwischen den Gelenkbolzen 40 und den Flügeln 44 liegt innerhalb der Mantelfläche 46 des Gelenkbolzens 40. Die Flügel 44 erstrecken sich im wesentlichen tangential zur Mantelfläche 46 und ragen mit ihren freien Enden 48 über die Mantelflüche 46 des Bolzens 40 hinaus (Figur 5). Die in Achsrichtung des Gelenkbolzens 40 gemessene Länge 50 der Flügel 44 ist so auf den Abstand 52 (Figur 8) zwischen den einander zugewandten Flächen 54 der U-Schenkel 30 des Unterbügels 20 abgestimmt, daß diese geringfügig kleiner ist als der Abstand 52. Beim Ausführungsbeispiel sind die inneren, einander zugewandten Flächen 54 des Unterbügels 20 durch die Stirnflächen von Ringbunden 56 gebildet, welche beim Durchziehen der Durchbrechungen 36 gebildet worden sind. Weiter zeigen die Figuren 4 bis 6, daß jedem der beiden Flügel 44 eine im Gelenkbolzen 40 angeordnete Ausnehmung 58 zugeordnet ist, die sich über die Länge 50 der Flügel 44 hinaus erstreckt. Die Ausgestaltung der Ausnehmungen 58 ist so getroffen, daß die Flügel 44 des aus einem elastischen Kunststoff bestehenden Gelenkbolzens 40 soweit in Richtung der Pfeile 60 (Figur 5) ausgelenkt werden können, daß diese vollständig, also auch mit ihrem freien Enden 48, in die Ausnehmungen 58 eintauchen können. Wie Figur 5 weiter zeigt, sind die beiden Flügel 44 in zwei mit Abstand voneinander liegenden zueinander im wesentlichen parallel verlaufenden Ebenen angeordnet. Die Flügel 44 erstrecken sich in einander entgegengesetzten Richtungen.

Eine andere Anordnung der lappenartigen Flügel ist in Figur 7 dargestellt. Dort ist ein Schnitt durch einen Gelenkbolzen 140 gezeigt, bei dem sich die in mit Abstand voneinander befindlichen, zueinander parallelen Ebenen angeordneten Flügel 144 von ihrer Entstehungsstelle am Gelenkbolzen 140 aus nach derselben Seite erstrecken. Diese Anordnung kann fertigungstechnische Vorteile haben. Die prinzipielle Ausgestaltung der Flügel 144 und die Zuordnung der Ausnehmungen 158 ist ebenfalls so getroffen, daß ein problemloses Eintauchen der Flügel 144 in Richtung der Pfeile 160 in die Ausnehmungen 158 möglich ist (Figur 7).

Die Montage der Gelenkverbindung soll anhand der Figuren 8 bis 11 näher erläutert werden. Zunächst werden die Durchbrechungen 34 bzw. 36 in den U-Schenkeln 26 bzw. 30 so aufeinander abgestimmt, daß der Gelenkbolzen 40 in Richtung des Pfeiles 41 (Figur 8) in die Durchbrechungen 34 bzw. 36 eingeführt werden kann. Dabei müssen natürlich die beiden Flügel 44 durch bestimmte Hilfsmittel in Richtung der Pfeile 60 (Figur 5) entgegen einer Federkraft in die Ausnehmungen 58 eingebracht werden, so wie dies in Figur 9 dargestellt ist. Wenn der Gelenkbolzen 40 seine in Figur 10 gezeichnete Betriebsstellung erreicht hat, federn die nun nicht mehr festgehaltenen Flügel 44 entgegen der Pfeile 60 in Figur 5 wieder in ihre Ausgangsposition zurück, wo ihre freien Enden 48 wieder über die Mantelfläche 46 des Gelenkbolzens 40 hinausragen (Figur 11). In dieser Position bilden die voneinander abgewandten, und in Richtung der Längsachse des Gelenkbolzens 46 gesehen mit Abstand 50 voneinander liegenden Endflächen 66 (Figur 4) Anschlagschultern bzw. Sicherungsmittel gegen Axialverschiebungen des Bolzens 40, die im Sinne einer Axialspielbegrenzung des Gelenkbolzens 40 mit den als Gegenanschlagschultern wirkenden Stirnflächen 54 der U-Schenkel 30 des Unterbügels 20 zusammenwirken.

Bei den in den Figuren 2 bzw. 3 dargestellten Ausführungsformen der Gelenkverbindungen ist das Kunststoffutter 32 bei der eben beschriebenen Ausführungsform durch einen in Figur 2 nicht erkennbaren Lackauftrag gebildet, der an wenigstens einer der beiden einander zugewandten Flächen der U-Schenkeln 26 bzw. 30 des Oberbügels 18 bzw. des Unterbügels 20 ausgebildet ist.

Bei der Ausführungsform gemäß Figur 3 ist anstelle des Kunststoffutters 32 zwischen den beiden einander zugewandten Flächen der U-Schenkel 26 bzw. 30 ein aus einem Kunststoff bestehendes plattenförmiges, separates Bauelement 31 in Form einer Scheibe angeordnet, das eine Durchgangsbohrung für den Gelenkbolzen 40 aufweist. Bei den beiden Ausführungsformen gemäß den Figuren 2 und 3 ist also im Bereich des Gelenkbolzens zwischen den einander zugewandten Flächen der U-Schenkel 26 bzw. 30 eine Zwischenschicht (Lackauftrag bzw. Kunststoffscheibe 31) aus einem gut gleitfähigen Material angeordnet.

## Patentansprüche

1. Wischblatt (10) für Scheibenwischanlagen an Kraftfahrzeugen, mit einem mehrgliedrigen, langgestreckten Tragbügelsystem (12) für eine auf der Scheibe angelegte Wischleiste (14) , das wenigstens einen übergeordneten Tragbügel (18 bzw. 20) hat, an dessen zumindest einen Ende ein untergeordneter Tragbügel (20 bzw. 25) mittels eines quer zur Tragbügellängserstreckung angeordneten Gelenkbolzens (40) angelenkt ist, wobei der im Bereich der Gelenkverbindung mit Querschnitt U-förmige Oberbügel (18) einen im Querschnitt U-förmigen Abschnitt des Unterbügels (20) mit seinen U-Schenkeln so übergreift, daß die U-Schenkel der beiden Tragbügel im wesentlichen parallel zueinander liegen, der Gelenkbolzen (40) die U-Schenkel in zueinander koaxialen Durchbrechungen (34, 36) passend durchdringt und in seinem zwischen den U-Schenkeln des Unterbügels befindlichen Mittelbereich mit über seine Mantelfläche ragenden Mitteln zum Sichern gegen axiale Verschiebung versehen ist und die Sicherungsmittel mit dem aus einem elastischen Material gefertigten Gelenkbolzen (40) einstückig verbunden entgegen einer Federkraft zumindest bis zur Bolzen-Mantelfäche (46) auslenkbar sind, dadurch gekennzeichnet, daß die Sicherungsmittel zwischen den U-Schenkeln (30) des Unterbügels (20) befindliche, voneinander abgewandte Anschlagschultern (66) aufweisen, die mit ihnen zugewandten Gegenschultern (54) des Unterbügels (20) zusammenwirken.

2. Wischblatt nach Anspruch 1, wobei die Sicherungsmittel durch zumindest einen lappenartigen, die Anschlagschultern (66) aufweisenden Flügel (44) gebildet sind, der mit seiner einen Längsseite mit dem Gelenkbolzen (40) innerhalb dessen Mantelfläche (46) verbunden ist, und sich im wesentlichen tangential zum Gelenkbolzen über dessen Mantelfläche hinaus erstreckt, daß der Flügel (44) eine Länge (50) hat, die auf den Abstand (52) zwischen einander zugewandten Flächen (54) des U-Schenkels (30) des Unterbügels (20) abgestimmt ist und daß dem Flügel eine sich über die Flügellänge (50) hinaus erstreckende Ausnehmung (58) in dem Gelenkbolzen (40) angeordnet ist, in welche das freie Ende (48) des Flügels (44) vollständig einbringbar ist.

3. Wischblatt nach Anspruch 2, wobei an dem Gelenkbolzen (40 bzw. 140), bezogen auf dessen Längsachse, zwei lappenartige Flügel (44) angeordnet sind und daß jedem Flügel eine Ausnehmung (58) in dem Gelenkbolzen (40) zugeordnet ist.

4. Wischblatt nach Anspruch 3, wobei die beiden lappenartigen Flügel (44) in mit Abstand voneinander liegenden, zueinander parallelen Ebenen angeordnet sind.

5. Wischblatt nach Anspruch 4, wobei sich die Flügel (48) von ihrer Entstehungsstelle am Gelenkbolzen (140) aus nach derselben Seite erstrecken (Figur 7).

6. Wischblatt nach einem der Ansprüche 1 bis 5, wobei im Bereich des Gelenkbolzens (40) zwischen den einander zugewandten Flächen der U-Schenkel des Oberbügels (18) und des Unterbügels (20) eine Zwischenschicht aus einem gut gleitfähigen Material angeordnet ist.

7. Wischblatt nach Anspruch 6, wobei die Zwischenschicht durch einen Lackauftrag an wenigstens einer der beiden U-Schenkelflächen gebildet ist.

8. Wischblatt nach Anspruch 6, wobei die Zwischenschicht durch ein aus einem Kunststoff bestehenden, plattenartigen, separaten Bauelement (31) gebildet ist, das eine Durchgangsbohrung für den Gelenkbolzen (40 bzw. 140) aufweist.

9. Wischblatt nach einem der Ansprüche 6 bis 8, wobei die Zwischenschicht durch ein aus Kunststoff bestehendes Futter (32) gebildet ist, das Durchbrechung (34) ragende Lageraugen (38) aufweist.

10. Wischblatt nach einem der Ansprüche 1 bis 8, wobei die Lagerfläche des Gelenkbolzens (40) in den Durchbbrechungen (34) des übergeordneten Tragbügels (18) durch nach außen gerichtete Durchzüge (35) vergrößert ist.

## Claims

1. Wiper blade (10) for window and lens glass wiper systems on motor vehicles, having a multisection, elongate supporting-bracket system (12) for a wiper strip (14) placed against the window or lens glass, which supporting-bracket system (12) has at least one primary supporting bracket (18 and 20) to whose at least one end is coupled a subordinate supporting bracket (20 and 25, respectively), by means of a hinge pin (40) arranged transversely to the longitudinal extent of the supporting bracket, the upper bracket (18), which is of U-shaped cross section in the region of the hinge connection, engaging with its U limbs over a cross-sectionally U-shaped section of the lower bracket (20) in such a manner that the U limbs of the two supporting brackets essentially lie parallel to one another, the hinge pin (40) penetrates through the U limbs fitting into openings (34, 36) which are coaxial to each other and in its central region, which is situated between the U limbs of the lower bracket, is provided with means which protrude over its circumferential surface for the purpose of securing against axial displacement, and the securing means connected integrally to the hinge pin (40), which is manufactured from an elastic material, can be deflected counter to a spring force at least as far as the circumferential surface (46) of the pin, characterized in that the securing means have stop shoulders (66) which are situated between the U limbs (30) of the lower bracket (20), face away from one another and interact with abutment shoulders (54) of the lower bracket (20), which abutment shoulders (54) face towards them.

2. Wiper blade according to Claim 1, the securing means being formed by at least one tab-like wing (44) which has the stop shoulders (66), is connected, by its one longitudinal side, to the hinge pin (40), within its circumferential surface (46), and extends essentially tangentially to the hinge pin over and beyond its circumferential surface, in that the wing (44) is of a length (50) which is matched to the distance (52) between mutually facing surfaces (54) of the U limb (30) of the lower bracket (20), and in that the wing is assigned a recess (58) in the hinge pin (40), which recess extends over and beyond the length of the wing (50) and into which the free end (48) of the wing (44) can be placed completely.

3. Wiper blade according to Claim 2, two tab-like wings (44) being arranged on the hinge pin (40 or 140), with respect to its longitudinal axis, and in that each wing is assigned a recess (58) in the hinge pin (40).

4. Wiper blade according to Claim 3, the two tab-like wings (44) being arranged in planes which lie at a distance from one another and are parallel to one another.

5. Wiper blade according to Claim 4, the wings (144) extending from their point of origination on the hinge pin (140) towards the same side (Figure 7).

6. Wiper blade according to one of Claims 1 to 5, an intermediate layer of readily slideable material being arranged in the region of the hinge pin (40) between the mutually facing surfaces of the U limbs of the upper bracket (18) and of the lower bracket (20).

7. Wiper blade according to Claim 6, the intermediate layer being formed by a coating application on at least one of the two U-limb surfaces.

8. Wiper blade according to Claim 6, the intermediate layer being formed by a plate-like, separate structural element (31) which consists of plastic and has a through-hole for the hinge pin (40 or 140).

9. Wiper blade according to one of Claims 6 to 8, the intermediate layer being formed by a lining (32) which consists of plastic and has bearing lugs (38) protruding into the opening (34).

10. Wiper blade according to one of Claims 1 to 8, the bearing surface of the hinge pin (40) in the openings (34) of the primary supporting bracket (18) being enlarged by supports (35) which are directed outwards.

## Revendications

1. Raclette d'essuie-glace (10) pour installations d'essuie-glace sur des véhicules automobiles, comportant un système à étrier support allongé, à plusieurs éléments, pour une bande de raclette (14) appliquée sur la vitre, ayant au moins un étrier support (18 ou 20) disposé de façon supérieure, à au moins une extrémité duquel un étrier support (20 ou 25) inférieur est articulé au moyen d'un goujon d'articulation (40) disposé transversalement par rapport à la direction longitudinale de l'étrier support, l'étrier supérieur (18) qui, dans la zone de la liaison d'articulation, a une section transversale en forme de U, saisissant par le dessus, par ses branches, un tronçon à section transversale en forme de U de l'étrier inférieur (20), de manière que les branches de U des deux étriers support sont situées sensiblement parallèlement l'une à l'autre, le goujon d'articulation (40) traversant de façon ajustée les branches de U, dans des passages (34, 36) coaxiaux, et étant doté dans sa zone médiane, située entre les branches de U de l'étrier inférieur, de moyens dépassant sur sa surface enveloppe, destinés à empêcher tout déplacement axial et les moyens de sécurité, reliés d'une seule pièce au goujon d'articulation (40) fabriqué en un matériau élastique, étant susceptibles d'effectuer un débattement d'articulation, à l'encontre de la force d'un ressort, au moins jusqu'à la surface enveloppe de goujon (46),
caractérisée en ce que
les moyens de sécurité présentent des épaulements de butée (66) opposés l'un à l'autre, se trouvant entre les branches de U (30) de l'étrier inférieur (20), qui coopèrent avec des contre-épaulements (54), tournés vers eux, de l'étrier inférieur (20).

2. Raclette d'essuie-glace selon la revendication 1,
caractérisée en ce que
• les moyens de sécurité étant constitués par au moins une ailette (44) en forme de languette, présentant les épaulements de butée (66), ailette reliée par un de ses côtés longitudinaux au goujon d'articulation (40), à l'intérieur de sa surface de sa surface d'enveloppe (46), et s'étendant sensiblement tangentiellement par rapport au goujon d'articulation, au-delà de sa surface enveloppe, en ce que l'ailette (44) a une longueur (50) adaptée en fonction de l'espacement (52) entre des surfaces (54), tournées l'une vers l'autre, de la branche de U (30) de l'étrier inférieur (20), et
• à l'ailette est associé un évidement (58), ménagé dans le goujon d'articulation (40), s'étendant sur la longueur (50) de l'ailette, dans lequel l'extrémité libre (48) de l'ailette (44) peut être logée en totalité.

3. Raclette d'essuie-glace selon la revendication 2,
caractérisée en ce que
• sur le goujon d'articulation (40 ou 140), en se référant à son axe longitudinal, sont disposées deux ailettes (44) en forme de languettes, et
• à chaque ailette est associé un évidement (58) ménagé dans le goujon d'articulation (40).

4. Raclette d'essuie-glace selon la revendication 3,
caractérisée en ce que
les deux ailettes (44) en forme de languettes étant disposées dans des plans parallèles, placés à distance l'un de l'autre.

5. Raclette d'essuie-glace selon la revendication 4,
caractérisée en ce que
les ailettes (48) allant du même côté, en partant de leur point de constitution sur le goujon d'articulation (140) (figure 7).

6. Raclette d'essuie-glace selon l'une des revendications 1 à 5,
caractérisée en ce que
dans la zone du goujon d'articulation (40), étant disposée, entre les faces, tournées l'une vers l'autre, des branches de U de l'étrier supérieur (18) et de l'étrier inférieur (20), une couche intermédiaire constituée d'un matériau présentant de bonnes propriétés de glissement.

7. Raclette d'essuie-glace selon la revendication 6,
caractérisée en ce que
la couche intermédiaire étant constituée par une application de vernis sur au moins l'une des deux surfaces de branches de U.

8. Raclette d'essuie-glace selon la revendication 6,
caractérisée en ce que
la couche intermédiaire étant constituée par un composant (31) séparé, sous forme d'une plaque, réalisé en matière plastique, présente un trou de passage pour le goujon d'articulation (40 ou 140).

9. Raclette d'essuie-glace selon l'une des revendications 6 à 8,
caractérisée en ce que
la couche intermédiaire étant constituée par une doublure (32) réalisée en matière plastique, présente des oeillets de palier (38) traversant le passage (34).

10. Raclette d'essuie-glace selon l'une des revendications 1 à 8,
caractérisée en ce que
la surface de palier du goujon d'articulation (40), dans les passages (34) de l'étrier support (18) en position supérieure, est agrandie par des passages (35) tournés vers l'extérieur.
